(19) **Europäisches Patentamt**
European Patent Office
Office européen des brevets

(11) **EP 1 979 175 B1**

(12) **EUROPÄISCHE PATENTSCHRIFT**

(45) Veröffentlichungstag und Bekanntmachung des Hinweises auf die Patenterteilung:
**16.09.2009 Patentblatt 2009/38**

(21) Anmeldenummer: **06819687.2**

(22) Anmeldetag: **23.11.2006**

(51) Int Cl.:
**B60C 15/06** (2006.01)

(86) Internationale Anmeldenummer:
**PCT/EP2006/068783**

(87) Internationale Veröffentlichungsnummer:
**WO 2007/082595 (26.07.2007 Gazette 2007/30)**

(54) **FAHRZEUGLUFTREIFEN MIT EINEM WULSTVERSTÄRKER**

VEHICLE PNEUMATIC TYRE WITH A BEAD REINFORCEMENT MEANS

BANDAGE PNEUMATIQUE DE ROUE DE VEHICULE DOTE D'UN RENFORT DE BOURRELET

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.01.2006 DE 102006002961**

(43) Veröffentlichungstag der Anmeldung:
**15.10.2008 Patentblatt 2008/42**

(73) Patentinhaber: **Continental Aktiengesellschaft**
**30165 Hannover (DE)**

(72) Erfinder:
• **KRAUS, Martin Josef**
**30167 Hannover (DE)**
• **KOMISCHKE, Ralf**
**31275 Lehrte (DE)**
• **LUDWIG, Jens**
**30165 Hannover (DE)**
• **MAZUR, Heinz**
**30900 Wedemark (DE)**

(74) Vertreter: **Finger, Karsten**
**Continental Aktiengesellschaft**
**Patente und Lizenzen**
**Postfach 169**
**D-30001 Hannover (DE)**

(56) Entgegenhaltungen:
EP-A1- 0 676 304          WO-A-03/103990
DE-A1-102004 008 308      JP-A- 2001 018 620
JP-A- 2003 312 216        JP-A- 2004 155 322

EP 1 979 175 B1

**Beschreibung**

Die Erfindung betrifft einen Fahrzeugreifen - insbesondere einen Fahrzeugluftreifen - mit einem Laufstreifen, mit einem radial innerhalb des Laufstreifens ausgebildeten Befestigungsbereich zur Sicherung des Fahrzeugreifens auf einer korrespondierend ausgebildeten Sitzfläche einer Felge und mit einem Verstärkungsmaterial, das in dem Befestigungsbereich ausgebildet ist, wobei das Verstärkungsmaterial über den Umfang des Fahrzeugreifens erstreckt ausgebildet ist und mit wenigstens einem spiralig von radial innen nach radial außen ausgebildeten, in Umfangsrichtung gewickelt angeordneten Festigkeitsträger ausgebildet ist.

Ein derartiger Fahrzeugreifen ist beispielsweise aus der DE 10 2004 008 308 A1 bekannt.

Trotz großer Vorteile einer derartigen Ausbildung bezüglich der hohen Zugfestigkeit in Umfangsrichtung im Nahbereich zur Sitzfläche, wodurch eine hohe Sitzsicherheit erzielt werden kann, kann die durch das Verstärkungsmaterial in Umfangsrichtung erzielte hohe Zugfestigkeit die Ausformung des Fahrzeugreifens bei der Herstellung erschweren. Darüber hinaus kann die längs der radialen Erstreckung des Fahrzeugreifens unstetige, abrupte Veränderung der Zugfestigkeit in Umfangsrichtung zwischen Verstärkungsmaterial und dem umgebenden Material zu unerwünscht starken Belastungen und Ermüdungen des umgebenden Materials führen.

Es ist - beispielsweise aus der WO03/103990A1 - bekannt, einen Fahrzeugluftreifen mit einem radial innerhalb des Laufstreifens ausgebildeten Reifenwulst zur Sicherung des Fahrzeugluftreifens auf einer korrespondierend ausgebildeten Sitzfläche einer Felge und mit einem über den Umfang des Fahrzeugreifens erstreckten Wulstverstärkungsmaterial auszubilden, das mit spiralig von radial innen nach radial außen ausgebildeten, in Umfangsrichtung gewickelt angeordneten Festigkeitsträgern ausgebildet ist, die in jeder einzelnen Windung in Umfangsrichtung segmentiert sind. Hierdurch wird die Umfangszugfestigkeit reduziert, so dass zumindest die Ausformung des Fahrzeugreifens während der Herstellung erleichtert werden kann. Gleichzeitig wird hiermit im vulkanisierten Reifen aber auch die in den segmentierten Kord einleitbare Arbeit reduziert und muss durch die umgebende, vulkanisierte Gummimischung aufgenommen werden.

Der Erfindung liegt die Aufgabe zu Grunde, einen Fahrzeugreifen - insbesondere einen Fahrzeugluftreifen - mit einem Laufstreifen, mit einem radial innerhalb des Laufstreifens ausgebildeten Befestigungsbereich zur Sicherung des Fahrzeugreifens auf einer korrespondierend ausgebildeten Sitzfläche einer Felge und mit einem Verstärkungsmaterial, das in dem Befestigungsbereich ausgebildet ist, wobei das Verstärkungsmaterial über den Umfang des Fahrzeugreifens erstreckt ausgebildet ist und mit wenigstens einem spiralig von radial innen nach radial außen ausgebildeten in Umfangsrichtung gewickelt angeordneten Festigkeitsträger ausgebildet ist, bei Beibehaltung hoher Zugfestigkeit in Umfangsrichtung im Befestigungsbereich des Fahrzeugreifens einfach und sicher herzustellen.

Die Aufgabe wird erfindungsgemäß durch die Ausbildung eines Fahrzeugreifens - insbesondere eines Fahrzeugluftreifens - mit einem Laufstreifen, mit einem radial innerhalb des Laufstreifens ausgebildeten Befestigungsbereich zur Sicherung des Fahrzeugreifens auf einer korrespondierend ausgebildeten Sitzfläche einer Felge und mit einem Verstärkungsmaterial, das in dem Befestigungsbereich ausgebildet ist; wobei das Verstärkungsmaterial über den Umfang des Fahrzeugreifens erstreckt ausgebildet ist und mit wenigstens einem spiralig von radial innen nach radial außen ausgebildeten, in Umfangsrichtung gewickelt angeordneten Festigkeitsträger ausgebildet ist, gemäß den Merkmalen von Anspruch 1 gelöst, bei dem in einem ersten radial inneren Erstreckungsbereich des Verstärkungsmaterials ein kontinuierlich und in Umfangsrichtung durchgehend ausgebildeter Festigkeitsträger gewickelt ist und bei dem in einem zweiten radial äußeren Erstreckungsbereich des Verstärkungsmaterials ein in Umfangsrichtung segmentiert ausgebildeter Festigkeitsträger gewickelt ist.

Hierdurch wird im unmittelbaren Sitzbereich des Fahrzeugreifens auf der Felge die für den besonders sicheren Sitz gewünschte hohe Zugfestigkeit in Umfangsrichtung ermöglicht bei reduzierter Zugfestigkeit in Umfangsrichtung in dem radial weiter entfernt liegenden Bereich des Verstärkungsmaterials, wodurch die Ausformbarkeit erleichtert und die in radialer Richtung des Fahrzeugreifens bewirkten Übergänge der Veränderung der vom Verstärkungsmaterial bewirkten Zugfestigkeit in Umfangsrichtung abgeschwächt werden kann. Die Belastung der umgebenden Materialien kann reduziert werden.

Besonders vorteilhaft ist die Ausbildung eines Fahrzeugreifens gemäß den Merkmalen von Anspruch 2, mit jeweils einem am radial inneren Ende einer Reifenseitenwand ausgebildeten Reifenwulst, mit einer Karkasse, die sich auf beiden Seiten des Laufstreifens mit einem Hauptteil der Karkasse vom Laufstreifen ausgehend durch die Reifenseitenwand nach radial innen zum Reifenwulst erstreckt und die im Reifenwulst um einen zur Sicherung des Sitzes des Fahrzeugluftreifens auf einer korrespondierend ausgebildeten Felge über den Umfang des Fahrzeugluftreifens erstreckt ausgebildeten Wulstkern umgeschlagen ist und sich mit dem Umschlag der Karkasse nach radial außen erstreckt, wobei das Verstärkungsmaterial ein Wulstverstärkungsmaterial ist. Hierdurch kann besonders gut die in den Wulst eingetragene Arbeit definiert und optimiert verteilt werden.

Besonders vorteilhaft ist die Ausbildung eines Fahrzeugreifens gemäß den Merkmalen von Anspruch 3, wobei das Verstärkungsmaterial axial neben - insbesondere direkt auf - einer Karkassenlage angeordnet ist. Hierdurch kann besonders gut die in den Wulst eingetragene Arbeit definiert und optimiert verteilt werden. Das Verstärkungsmaterial nimmt den Verlauf der Einlage an im Aufbauprozess. Hierdurch kann sich eine statische und dynamische Stabilisierung der Einlage in diesem Sektor ergeben.

Besonders vorteilhaft ist die Ausbildung eines Fahrzeugreifens gemäß den Merkmalen von Anspruch 4, bei dem das Verstärkungsmaterial auf der dem Hauptteil der Karkasse axial zugewandten Seite des Wulstkerns - insbesondere zwischen dem Hauptteil der Karkasse und dem Wulstkern - angeordnet ist. Hierdurch kann das Ausfallgeschehen eines Reifens insbesondere eines Nutzfahrzeugluftreifens positiv beeinflusst werden. Bei Zwischenlage kann die Innenschicht darüber hinaus zusätzlich vor Abrissen geschützt werden.

Besonders vorteilhaft ist die Ausbildung eines Fahrzeugreifens gemäß den Merkmalen von Anspruch 5, bei dem das Verstärkungsmaterial auf der dem Umschlag der Karkasse axial zugewandten Seite des Wulstkerns - insbesondere zwischen dem Umschlag der Karkasse und dem Wulstkern - angeordnet ist.

Besonders vorteilhaft ist die Ausbildung eines Fahrzeugreifens gemäß den Merkmalen von Anspruch 6, mit einem an der radialen Außenseite des Wulstkerns angeordneten in Umfangsrichtung des Fahrzeugluftreifens über den gesamten Umfang des Fahrzeugluftreifens erstreckt ausgebildeten Kernreiter.

Besonders vorteilhaft ist die Ausbildung eines Fahrzeugreifens gemäß den Merkmalen von Anspruch 7, wobei das Verstärkungsmaterial axial zwischen Karkasse und Kernreiter vom Wulstkern nach radial außen entlang der Oberfläche des Kernreiters erstreckt ausgebildet ist.

Besonders vorteilhaft ist die Ausbildung eines Fahrzeugreifens gemäß den Merkmalen von Anspruch 8, wobei der Umschlag der Karkasse in radialer Richtung nach außen im radialen Erstreckungsbereich des Kernreiters endet. Dies ist insbesondere dann besonders vorteilhaft, wenn die Festigkeitsträger der Karkasse Korde sind, die nicht oder nur geringfügig unter Zug dehnbar sind - wie beispielsweise Stahlkorde -, und der Wulst besonders hohen Spannungen und besonders großen, in den Wulst einzuleitenden Arbeiten ausgesetzt ist.

Besonders vorteilhaft ist die Ausbildung eines Fahrzeugreifens gemäß den Merkmalen von Anspruch 9, wobei die Festigkeitsträger des Verstärkungsmaterials direkt auf die Oberfläche des Wulstkerns und/oder des Wulstkernreiters gewickelte Festigkeitsträger sind. Hierdurch kann der Festigkeitsträger weitgehend zugfrei bis in die Vulkanisationspresse verbleiben, wobei auch die Deformationen minimiert werden können.

Besonders vorteilhaft ist die Ausbildung eines Fahrzeugreifens gemäß den Merkmalen von Anspruch 10, mit einer Karkasse radialer Bauart.

Besonders vorteilhaft ist die Ausbildung eines Fahrzeugreifens gemäß den Merkmalen von Anspruch 11, wobei die Karkasse Festigkeitsträger aus Stahl aufweist.

Besonders vorteilhaft ist die Ausbildung eines Fahrzeugreifens gemäß den Merkmalen von Anspruch 12, wobei das Verstärkungsmaterial Festigkeitsträger aus Stahl aufweist.

Besonders vorteilhaft ist die Ausbildung eines Fahrzeugreifens gemäß den Merkmalen von Anspruch 13, wobei das Verstärkungsmaterial im radial inneren und radial äußeren Bereich der Verstärkungslage mit Festigkeitsträger gleichen konstruktiven Aufbaus und aus gleichem Materials ausgebildet ist.

Besonders vorteilhaft ist die Ausbildung eines Fahrzeugreifens gemäß den Merkmalen von Anspruch 14, wobei das Verstärkungsmaterial im radial inneren und radial äußeren Bereich der Verstärkungslage mit Festigkeitsträgern unterschiedlichen konstruktiven Aufbaus ausgebildet ist.

Besonders vorteilhaft ist die Ausbildung eines Fahrzeugreifens gemäß den Merkmalen von Anspruch 15, wobei das Verstärkungsmaterial im radial inneren und radial äußeren Bereich der Verstärkungslage mit Festigkeitsträgern mit unterschiedlichem Material ausgebildet ist.

Die Erfindung wird im Folgenden an Hand der in den Figuren 1 bis 7 dargestellten Ausführungsbeispiele näher erläutert. Darin zeigen

Fig. 1: Querschnittsdarstellung eines Nutzfahrzeugluftreifens für Schrägschulterfelgen in einer Querschnittsebene, die die Reifenachse beinhaltet,

Fig. 2a bis 2c: vergrößerte Schnittdarstellungen des radial inneren Seitenwandbereichs des Fahrzeugluftreifens von Fig. 1 im montierten, unbelasteten Betriebszustand auf einer Schrägschulterfelge in den drei Schnittebenen $S_1 - S_1$ (Fig. 2a), $S_2 - S_2$ (Fig. 2b), $S_3 - S_3$ (Fig. 2c) der Fig. 4,

Fig. 3a bis 3c: alternative Ausbildung des radial inneren Seitenwandbereichs eines Fahrzeugluftreifens, ebenfalls in Schnittdarstellungen entsprechend den drei Schnittebenen $S_1 - S_1$ (Fig. 3a), $S_2 - S_2$ (Fig. 3b), $S_3 - S_3$ (Fig. 3c) der Fig. 4,

Fig. 4: Draufsicht auf den Seitenwandbereich und den Wulstverstärker gemäß der Schnittdarstellung V-V von Fig. 2a bis 2c zur Erläuterung der Ausbildung des Wulstverstärkers,

Fig. 5: Querschnittsdarstellung eines Nutzfahrzeugluftreifens für Steilschulterfelgen in einer Querschnittsebene, die die Reifenachse beinhaltet,

Fig. 6a bis 6c: vergrößerte Schnittdarstellung des radial inneren Seitenwandbereichs des Fahrzeugluftreifens von Fig. 5 im montierten, unbelasteten Betriebszustand auf einer Steilschulterfelge entsprechend den Schnitten in den drei Schnit-

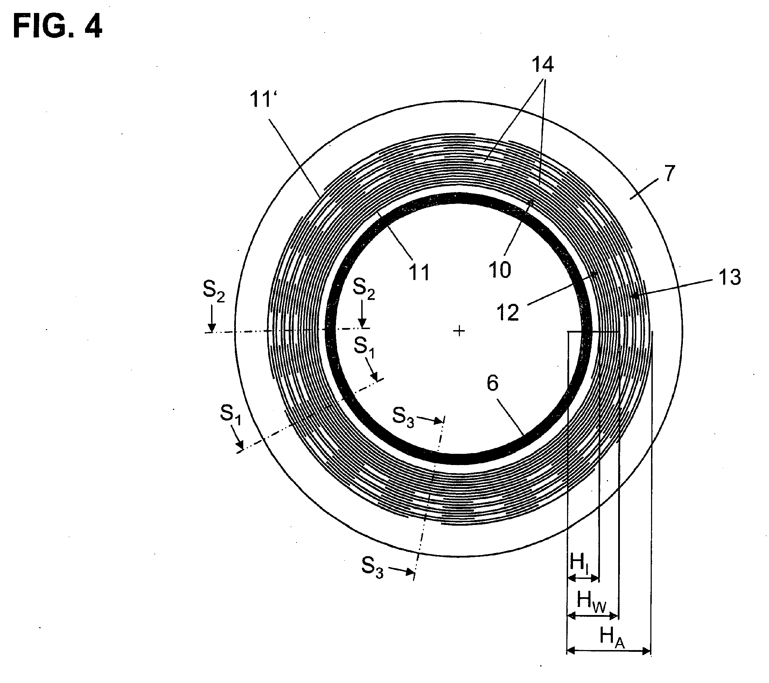

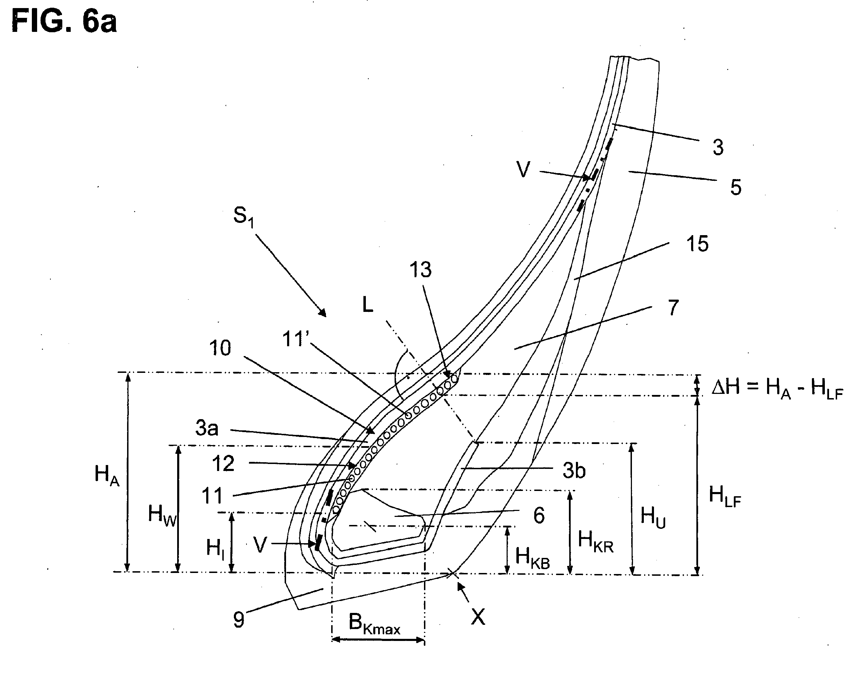

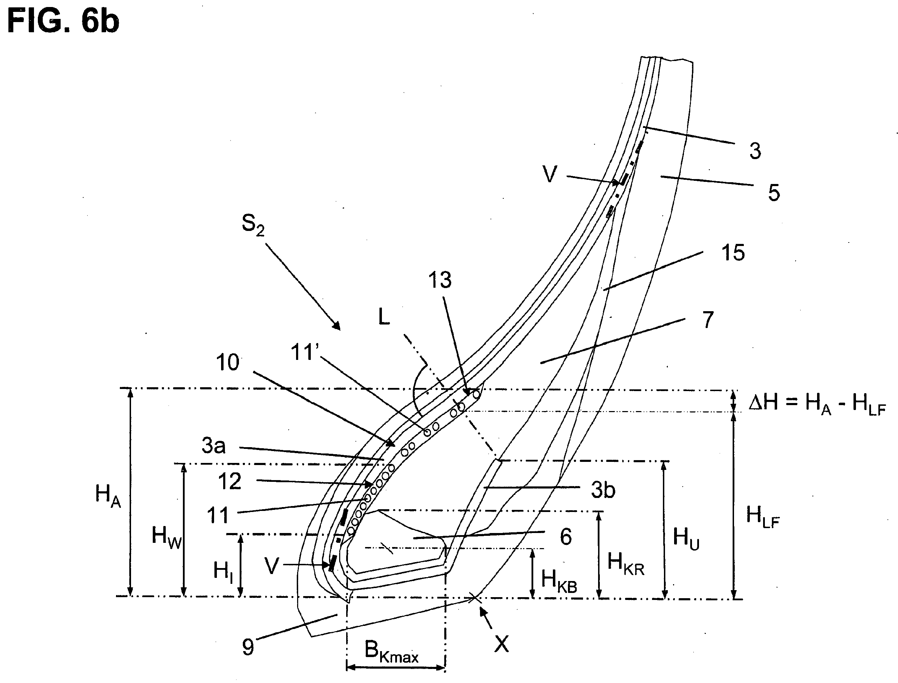

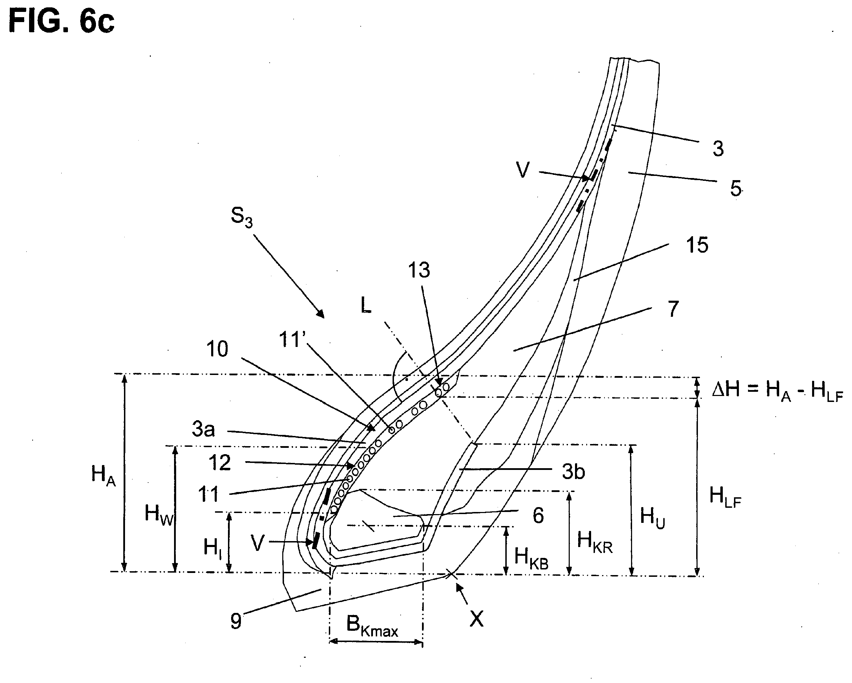

tebenen S$_1$ - S$_1$ (Fig. 6a), S$_2$ - S$_2$ (Fig. 6b), S$_3$ - S$_3$ (Fig. 6c) von Fig. 4,

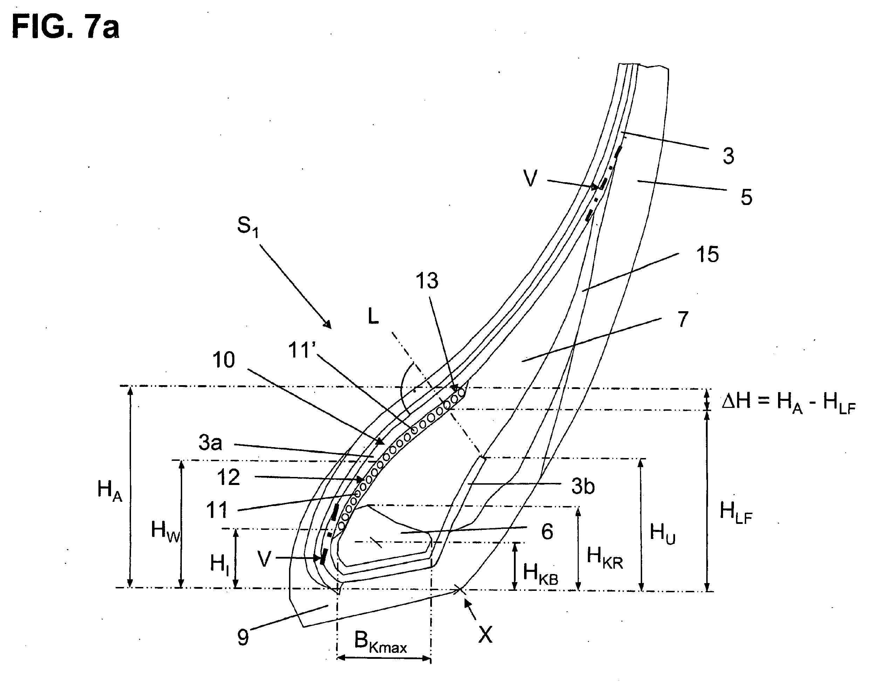

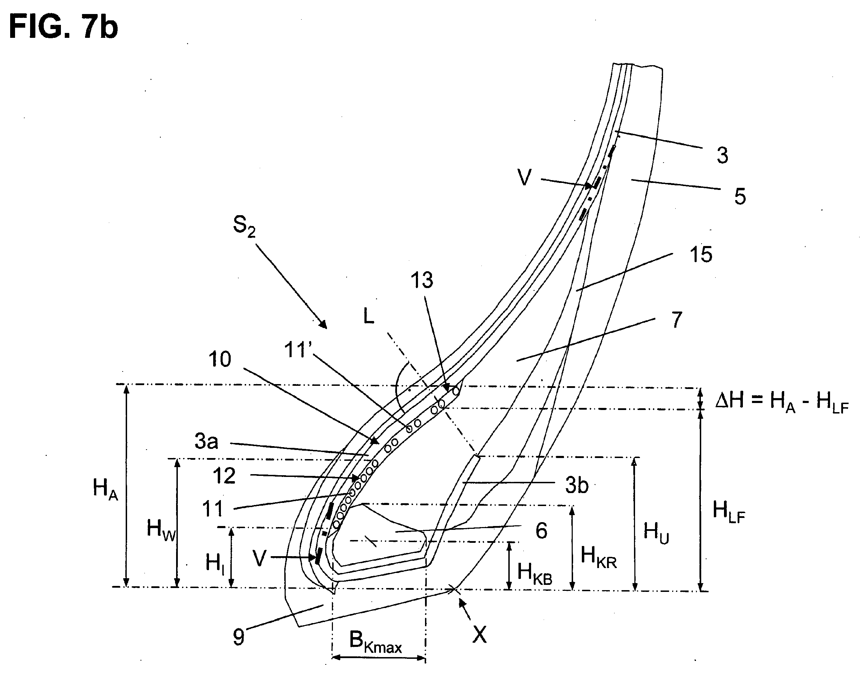

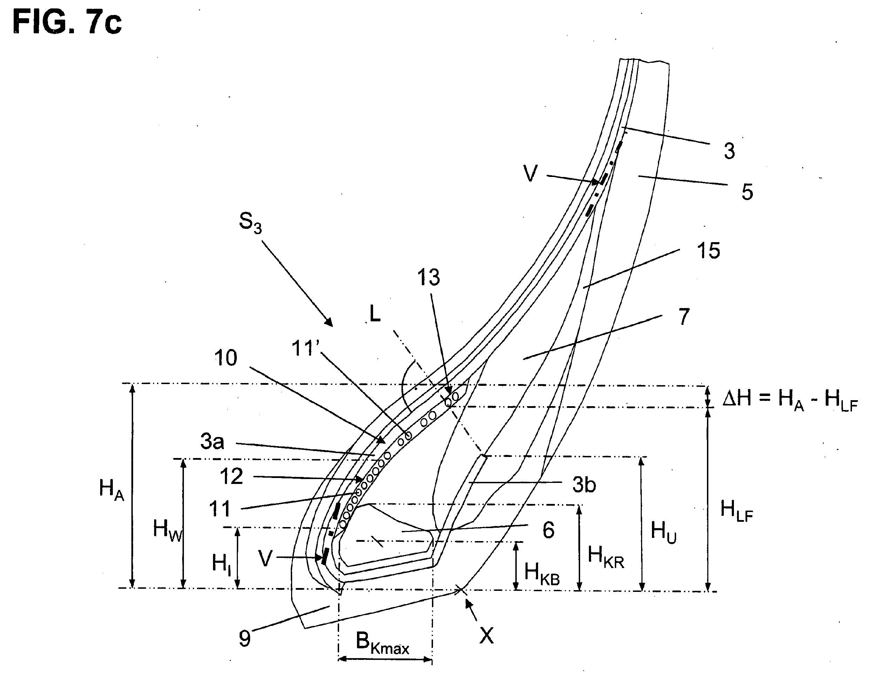

Fig. 7a bis 7c:   alternative Ausführung des radial inneren Seitenwandbereichs, ebenfalls in Schnittdarstellung entsprechend den Schnitten in den drei Schnittebenen S$_1$ - S$_1$ (Fig. 7a), S$_2$ - S$_2$ (Fig. 7b), S$_3$ - S$_3$ (Fig. 7c) von Fig. 4.

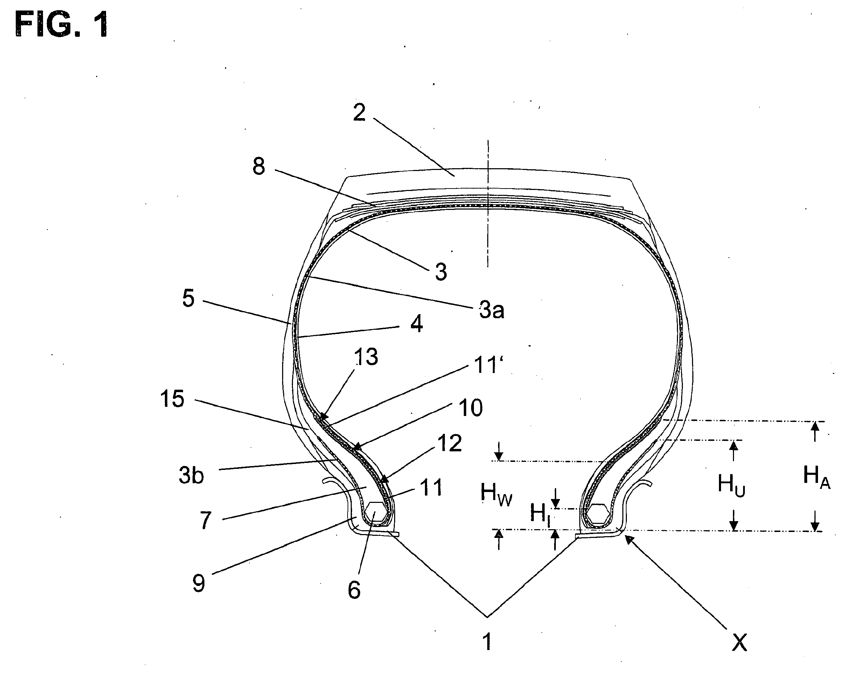

Die Fig. 1, 2a bis 2c, 3a bis 3c, 5, 6a bis 6c und 7a bis 7c zeigen jeweils einen Nutzfahrzeugluftreifen in einem auf einer korrespondierenden Felge montierten, unbelasteten Betriebszustand. Zur Vereinfachung wurde in Fig. 6a bis Fig. 6c und in Fig. 7a bis Fig. 7c auf die Darstellung der korrespondierenden Felge verzichtet.

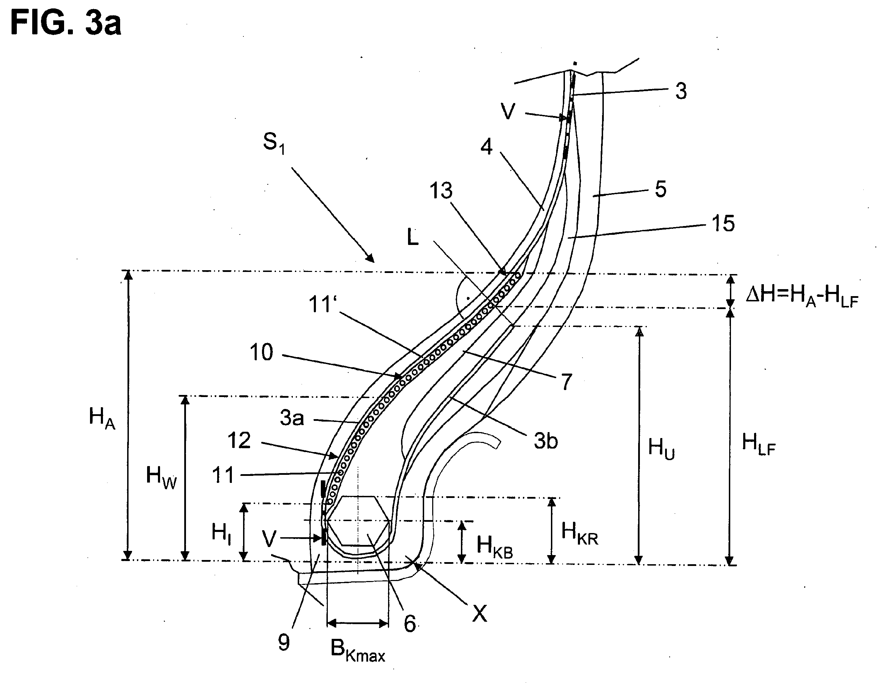

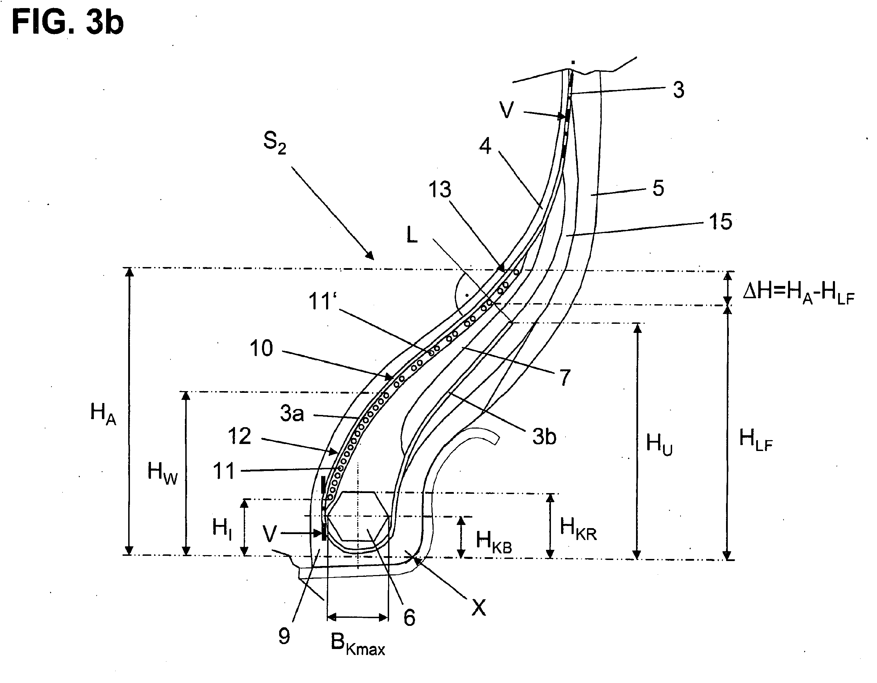

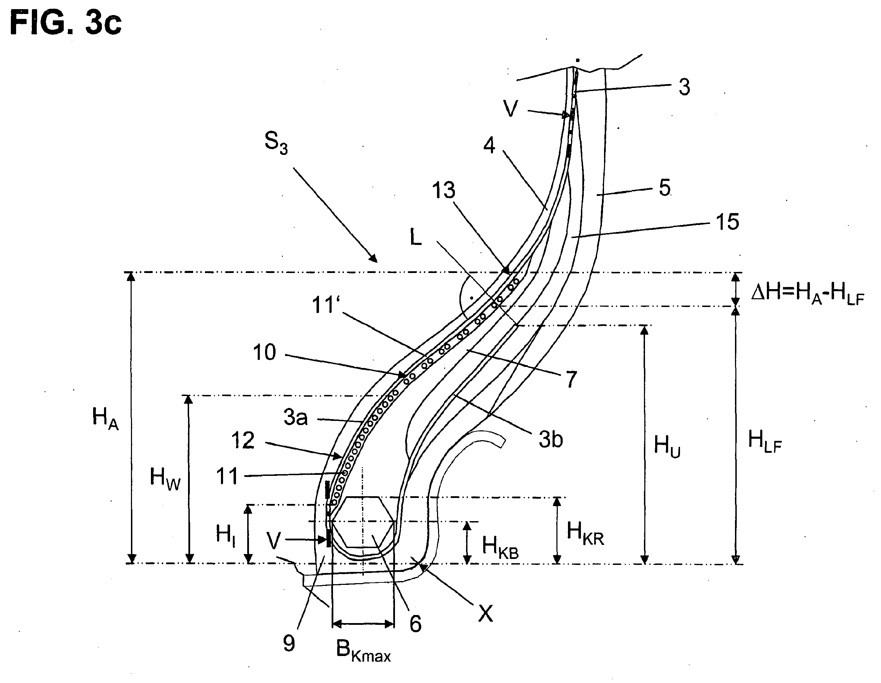

Fig. 1 zeigt schematisch einen Nutzfahrzeugluftreifen im Querschnitt, wobei im Wulstbereich auch eine Schrägschulterfelge angedeutet ist. Von den Bauteilen des Nutzfahrzeugluftreifens sind ein Laufstreifen 2, eine Karkasseinlage 3, ein mehrlagiger Gürtel 8, eine insbesondere doppellagige Innenschicht 4, zwei Seitenwände 5 und an jeder Seitenwand je ein Wulstkern 6, ein Kernprofil 7, ein Wulstband 9 und ein zusätzliches Gummiprofil 15 zwischen Seitenwand 5 und Kernprofil 7 dargestellt. Die Karkasseinlage 3 weist insbesondere Stahlkorde als Festigkeitsträger auf, die im rechten Winkel bzw. im Wesentlichen im rechten Winkel zur Umfangsrichtung des Reifens und somit in radialer Richtung des Reifens verlaufen. Der Wulstkern 6 besteht aus Stahlkorden, das radial außerhalb des Wulstkernes 6 angeordnete und auf diesem sitzende Kernprof 7 besteht aus einer Gummimischung mit einem hohen Elastizitätsmodul und kann auch - wie beispielsweise in den Fig. 3a bis 3c dargestellt ist - mehrteilig ausgeführt sein und somit aus Gummimischungen unterschiedlicher Elastizitätsmoduli bestehen.

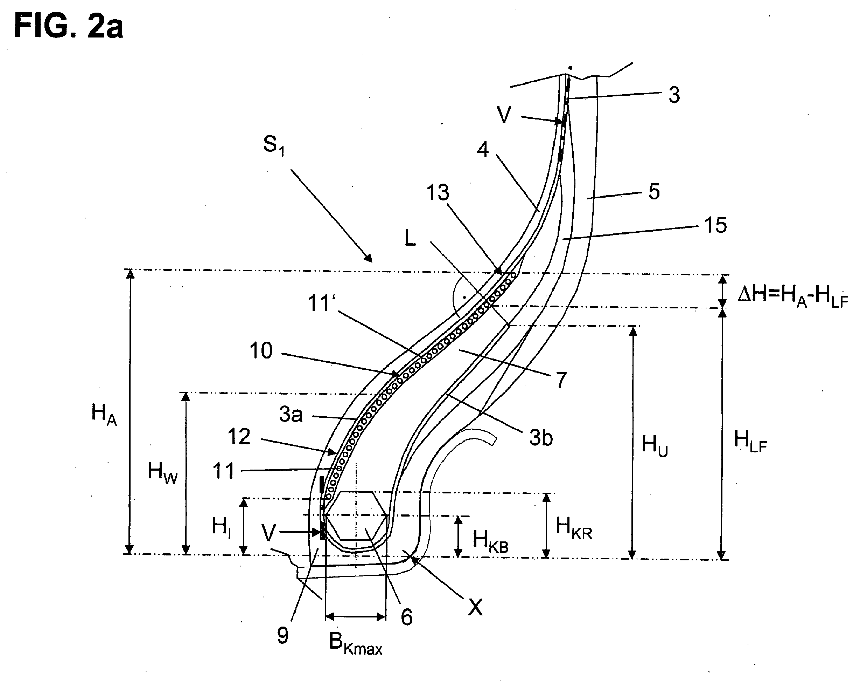

Wie in Figur 2a bis 2c dargestellt ist, erstreckt sich die Karkasseinlage 3 mit ihrem Hauptteil 3a vom Gürtel her kommend nach radial innen durch die Seitenwand entlang der axial inneren Seite des Kernreiters 7 und des Wulstkerns 6, ist auf der radial inneren Seite des Wulstkernes 6 um den Wulstkern 6 nach axial außen herumgeführt und um den Wulstkern nach radial außen herumgeschlagen und erstreckt sich mit ihrem Umschlag 3b auf der axialen Außenseite des Wulstkernes 6 und des Kernreiters 7 in direktem Berührkontakt zum Kernreiter 7 bis in einen radialen Abstand H$_U$ vom Felgeneckpunkt X.

Auf der axialen Innenseite des Kernreiters 7 ist zwischen Kernreiter 7 und dem Hauptteil 3a der Karkasse 3 eine Wulstverstärkungslage 10 ausgebildet. Die Wulstverstärkungslage 10 erstreckt sich dabei von einer radial inneren Position im radialen Abstand H$_1$ zum Felgeneckpunkt X bis zu einer radial äußeren Position im radialen Abstand H$_A$ vom Felgeneckpunkt X. Die Wulstverstärkungslage 10 besteht aus zwei radialen Erstreckungsbereichen 12 und 13, wobei der radial innere Erstreckungsbereich 12 aus einem in Umfangsrichtung über den gesamten Reifen erstreckten, in einer Gummimischung eingebetteten, von radial innen beginnend bei der radialen Höhe H$_1$ nach radial außen bis zur radialen Höhe H$_W$ erstreckt spiralig aufgewickelten, kontinuierlichen Festigkeitsträger 11 ausgebildet ist. Der radial weiter außen liegende Erstreckungsbereich 13 besteht aus einem in Umfangsrichtung orientierten und segmentierten Festigkeitsträger 11', der ebenfalls in einer Gummimischung eingebettet und von radial innen beginnend auf der radialen Höhe H$_W$ nach radial außen bis zur radialen Höhe H$_A$ erstreckt spiralig um die Reifenachse gewickelt ausgebildet ist. Die Wulstverstärkungslage 10 ist dabei längs ihrer radialen Erstreckung in direktem Berührkontakt zum Hauptteil 3a der Karkasseinlage 3.

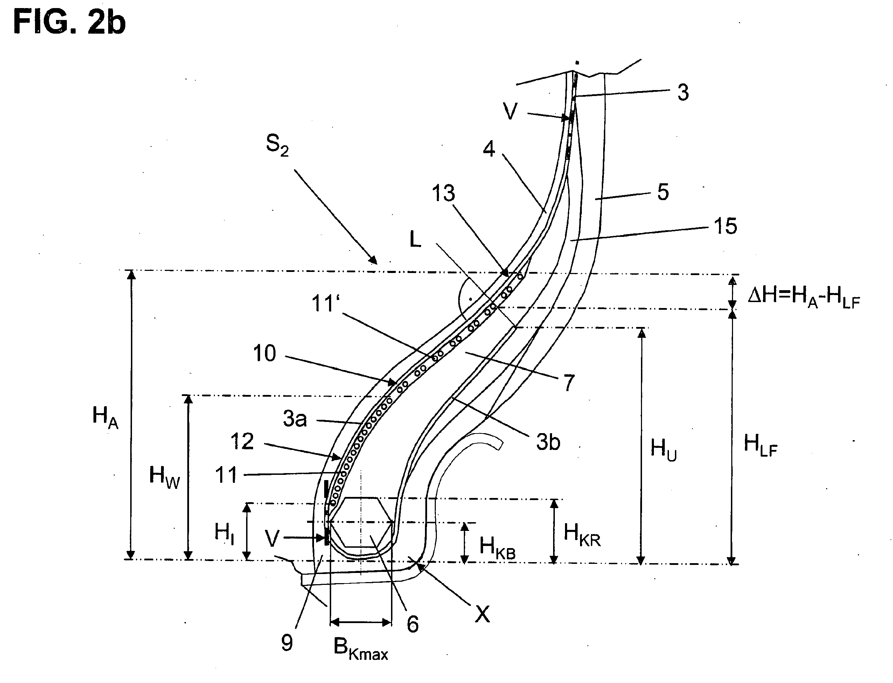

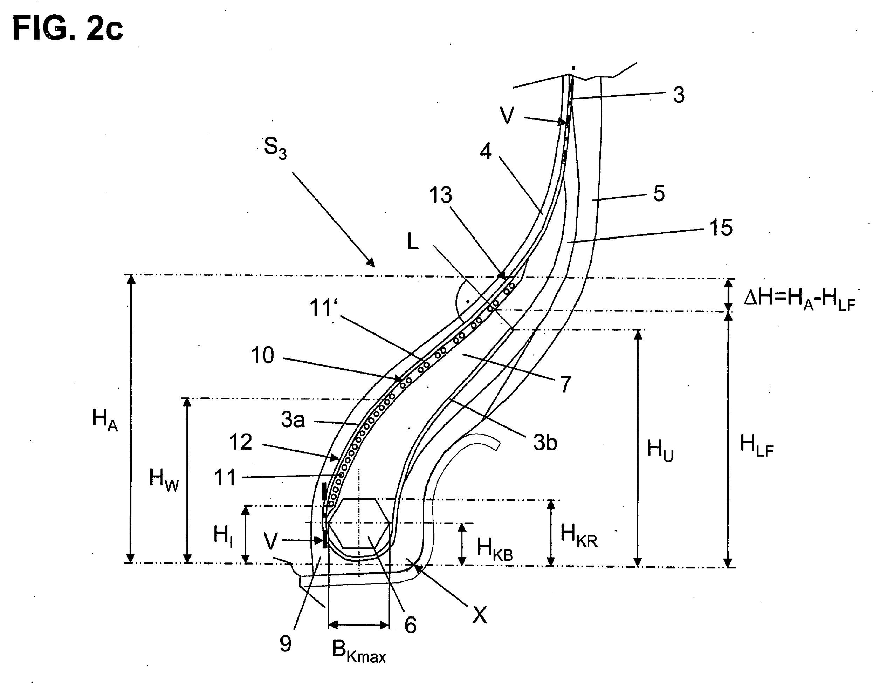

Art. Fig. 2b und 2c zeigen den gleichen Reifen der Fig. 2a entsprechend den in Fig.4 eingetragenen Schnitten S$_2$- S$_2$ beziehungsweise S$_3$- S$_3$ jeweils in einer durch Umfangslücken 14 der Segmentierung des Festigkeitsträgers 11' dargestellten Schnittebene.

Für das Maß H$_I$ gilt: H$_{KB}$ ≤ H$_I$, ≤ H$_{KR}$ wobei H$_{KB}$ den radialen Abstand vom Felgeneckpunkt X angibt, in dem der Wulstkern 6 seine maximale Breite B$_{KMax}$ in axialer Richtung des Fahrzeugluftreifens gemessen aufweist, und H$_{KR}$ den radialen Abstand vom Felgeneckpunkt X angibt, der dem maximalen radialen Abstand der radial äußeren Mantelfläche des Wulstkernes 6 zum Felgeneckpunkt X entspricht.

In Fig. 2a bis 2c ist die in den dargestellten Schnittebenen im radialen Abstand H$_U$ vom Felgeneckpunkt X des Lagenendes des Karkassumschlags 3b der Karkasseinlage 3 berührende Senkrechte L zum Hauptteil der Karkasse 3a eingezeichnet. Der Schnittpunkt (Lotfußpunkt) dieser Senkrechten 1 zum Hauptteil der Karkasse 3a weist einen radialen Abstand H$_{LF}$ zum Felgeneckpunkt X auf. Die Wulstverstärkungslage 10 erstreckt sich nach radial außen bis in den radialen Abstand H$_A$ vom Felgeneckpunkt X, wobei für H$_A$ gilt: (0,65 H$_{LF}$) ≤H$_A$ ≤(1,2 H$_{LF}$).

Fig. 3a bis 3c zeigt eine alternative Ausbildung eines derartig ausgebildeten Nutzfahrzeugluftreifens zum Einsatz auf einer Schrägschulterfelge im montierten und unbelasteten Zustand auf einer korrespondierend ausgebildeten Schrägschulterfelge bekannter Art. Die Ausbildung entspricht der in den Fig. 2a bis 2c dargestellten Ausführung, wobei anders als in der in den Fig. 2a bis 2c der Kernreiter 7 mehrteilig aus mindestens zwei Gummimischungen unterschiedlicher Elastizitätsmoduli ausgebildet ist.

Im dargestellten Ausführungsbeispiel ist der Kernreiter zweiteilig aus zwei Gummimischungen unterschiedlicher Elastizitätsmoduli ausgebildet.

Wie in Fig. 4 zu erkennen ist, ist der Festigkeitsträger 11 der Wulstverstärkungslage 10 in einem radial inneren Erstreckungsbereich 12 der Wulstverstärkungslage 10 ausgehend von der radial inneren Erstreckuhgsposition der Wulstverstärkungslage 10 im radialen Abstand H$_I$ vom Felgeneckpunkt X bis zu einem radialen Abstand H$_W$ vom Felgeneckpunkt X kontinuierlich von radial innen nach radial außen spiralig gewickelt ausgebildet. In einem radial äußeren Erstreckungsbereich 13 der Wulstverstärkungslage 10, der sich radial zwischen der Position im radialen Abstand Hw zum Felgeneckpunkt X und der radial äußeren Erstreckungsposition der Wulstverstärkungslage 10 im radialen Abstand $H_A$ vom Felgeneckpunkt X erstreckt, ist der Festigkeitsträger 11' in Umfangsrichtung des Reifens in regelmäßigen Abständen segmentiert ausgebildet. Dabei ergibt sich in Umfangsrichtung des Reifens jeweils zwischen dem Ende des einen Umfangssegmentes und dem Anfang des nächsten Umfangssegmentes ein Umfangsspalt 14. Die Segmentierung ist dabei so gewählt, dass der Umfangsspalt 14 durch ein Festigkeitsträgersegment der nächsten Windung überbrückt wird. Die Festigkeitsträger 11 und 11' sind beispielsweise Korde.

Die Korde 11 und 11' der Erstreckungsbereiche 12 und 13 der Wulstverstärkungslage 10 sind in einer Ausführung Korde gleicher Kordkonstruktion. In einer Ausführung sind die Korde 11 und 11' ein Kord der Konstruktion (2 +6) oder ein Kord (3 + 7) mit gleichen Filamentdurchmessern und mit gleicher Schlagrichtung. In einer weiteren Ausführung sind die Filamentdurchmesser der beiden Korde 11 und 11' unterschiedlich. In einer weiteren Ausführung sind die Schlagrichtung der beiden Korde 11 und 11' unterschiedlich.

In einer anderen Ausführung sind die Korde 11 und 11' der Erstreckungsbereiche 12 und 13 der Wulstverstärkungslage 10 Korde unterschiedlicher Kordkonstruktion. Beispielsweise ist einer der beiden Korde 11 und 11' ein monofilamentiger und der andere der beiden Korde 11 und 11' ein multifilamentiger Kord.

Die Korde 11 und 11' der Erstreckungsbereiche 12 und 13 der Wulstverstärkungslage 10 sind in einer Ausbildung Korde gleichen Materials. In einer anderen Ausführung sind die Korde 11 und 11' der Erstreckungsbereiche 12 und 13 der Wulstverstärkungslage 10 aus Korden unterschiedlichen Materials ausgebildet.

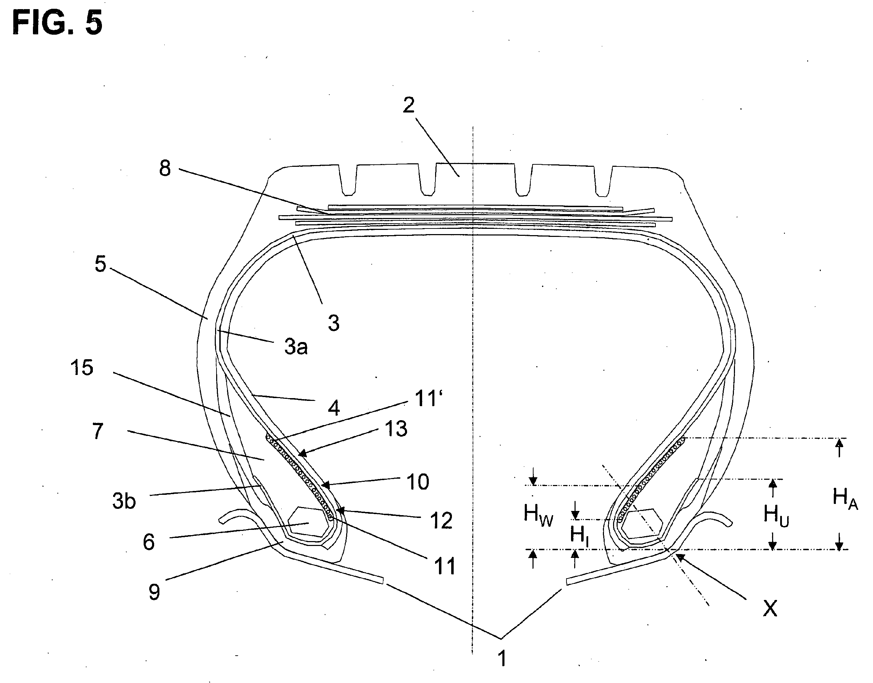

Fig. 5 zeigt schematisch einen Nutzfahrzeugluftreifen im Querschnitt, wobei im Wulstbereich eine Steilschulterfelge angedeutet ist. Die Bezeichnungen der Bauteile sowie die Bezeichnungen der Bemassungen sind hierbei identisch zu denen in Fig. 1.

Fig. 6a bis 6c zeigt eine Ausbildung eines derartigen Nutzfahrzeugluftreifens, der zum Einsatz auf einer Steilschulterfelge modifiziert ausgebildet ist, im montierten, unbelasteten Betriebszustand auf einer korrespondierend ausgebildeten - nicht dargestellten - Steilschulterfclge bekannter Art. Fig. 6b und 6c zeigen den gleichen Reifen der Fig. 6a entsprechend den in Fig. 4 eingetragenen Schnitten S₂ - S₂ beziehungsweise S₃-S₃ jeweils in einer durch Umfangslücken 14 der Segmentierung des Festigkeitsträgers 11' dargestellten Schnittebene.

Fig. 7a bis 7c zeigt eine alternative Ausbildung eines derartig ausgebildeten Nutzfahrzeugluftreifens zum Einsatz auf einer Steilschulterfelge im montierten und unbelasteten Zustand auf einer korrespondierend ausgebildeten - nicht dargestellten - Steitschulterfelge bekannter Art. Die Ausbildung entspricht der in den Fig. 6a bis 6c dargestellten Ausführung, wobei anders als in der in den Fig. 6a bis 6c der Kernreiter 7 mehrteilig aus mindestens 2 Gummimischungen unterschiedlicher Elastizitätsmoduli ausgebildet ist. Im dargestellten Ausführungsbeispiel ist der Kernreiter zweiteilig aus zwei Gummimischungen unterschiedlicher Elastizitätsmoduli ausgebildet.

Der radiale Abstand Hw ausgehend vom Felgeneckpunkt X ist in den dargestellten Ausführungsbeispielen so bemessen, dass für ihn gilt:

$$(0{,}82\ H_{LF}) \geq H_W \geq (0{,}29\ H_{LF}).$$

Der Festigkeitsträger 11 ist in den dargestellten Ausführungsbeispielen ein mono- oder mehrfilamentiger Stahlkord, der Festigkeitsträger 11' ist in dem dargestellten Ausführungsbeispielen ein mehrfilamentiger Stahlkord.

In den dargestellten Ausführungsbeispielen liegt die radiale Erstreckung $H_A$ radial innerhalb der radial äußeren maximalen Erstreckung des Kernreiters 7.

Der Wulstkern 6 ist beispielsweise - wie in den dargestellten Ausführungsbeispielen gemäß Fig. 1, Fig. 2a bis 2c, Fig. 3a bis 3c zu erkennen ist - ein Wulstkern 6 mit hexagonalem Querschnitt. In einer anderen Ausführung ist der Wulstkern 6 - wie in den dargestellten Ausführungsbeispielen gemäß Fig. 5, Fig. 6a bis 6c und Fig. 7a bis 7c zu erkennen ist - ein Wulstkern mit pentagonalem Querschnitt mit zum Teil abgeflachten Ecken. In weiterer, nicht dargestellter, alternativer Ausführung ist der Wulstkern 6 in alternativen Querschnittsformen bekannter Art beispielsweise in runder, ovaler, elliptischer oder sonstiger für die Ausbildung eines Wulstkerns geeigneter polygonaler Querschnittsform ausgebildet.

In einem Ausführungsbeispiel ist $H_I$, beispielsweise 10 bis 25 mm groß gewählt. In den dargestellten Ausführungsbeispielen ist $H_I$ beispielsweise 15 mm groß gewählt.

In einem Ausführungsbeispiel ist die Differenz ∆H zwischen $H_A$ und $H_{LF}$, so gewählt, dass für ∆H = ($H_A$ - $H_{LF}$) gilt: (- 15mm) ≤∆H≤(+ 15mm). In den dargestellten Ausführungsbeispielen ist beispielsweise ∆H=5mm gewählt.

In einer weiteren, nicht dargestellten Ausführung ist der Festigkeitsträger 11 im radial inneren Bereich 12 der kontinuierlichen Wicklung in dessen radial innerem Erstreckungsbereich mit höherer Wickeldichte gewickelt als der Festigkeitsträger 11' in dessen radial äußerem Erstreckungsbereich 13. Dies kann sinnvoll sein, wenn zusätzliche Feinabstufungen der Zugfestigkeit zwischen radial innerem Bereich 12 und radial äußeren Bereich 13 der Wulstverstärkungslage 10 gewünscht erforderlich ist.

In einer weiteren, nicht dargestellten Ausführung ist in dem radial äußeren mit Segmentierungen versehenen Bereich 13 der Wulstverstärkungslage 10 in dessen radialer Erstreckung von radial innen nach radial außen eine abnehmende Wicklungsdichte des Festigkeitsträgers 11' ausgebildet. Dies kann bei Bedarf sinnvoll sein, um eine weitere Feinabstufung der Zugfestigkeitsveränderungen von radial innen nach radial außen einzustellen.

In einer weiteren, nicht dargestellten Ausführungsform sind sowohl in dem radial inneren Erstreckungsbereich 12 mit kontinuierlich gewickelten Festigkeitsträger 11 als auch in dem radial äußeren Erstreckungsbereich 13 mit in Umfangsrichtung segmentiert gewickeltem Festigkeitsträger 11' der Wulstverstärkungslage 10 jeweils eine von radial innen nach radial außen abnehmende Wicklungsdichte ausgebildet.

Bezugszeichenliste

(Teil der Beschreibung)

| | |
|---|---|
| 1 | Felge |
| 2 | Laufstreifenprofil |
| 3 | Karkasse |
| 3a | Hauptteil der Karkasse |
| 3b | Umschlag der Karkasse |
| 4 | Innenschicht |
| 5 | Seitenwand |
| 6 | Wulstkern |
| 7 | Kernreiter (Apex) |
| 8 | Gürtel |
| 9 | Wulstband |
| 10 | Wulstverstärkungslage |
| 11 | Festigkeitsträger im radial inneren Bereich 12 der Wulstverstärkungslage 10 |
| 11' | Festigkeitsträger im radial äußeren Bereich 13 der Wulstverstärkungslage 10 |
| 12 | Erster, radial innerer Bereich der Wulstverstärkungslage 10 |
| 13 | Zweiter, radial äußerer Bereich der Wulstverstärkungslage 10 |
| 14 | Umfangsunterbrechung |
| 15 | Zusätzliches Profil aus einer Gummimischung |

**Patentansprüche**

1. Fahrzeugreifen - insbesondere Fahrzeugluftreifen - mit einem Laufstreifen, mit einem radial innerhalb des Laufstreifens ausgebildeten Befestigungsbereich zur Sicherung des Fahrzeugreifens auf einer korrespondierend ausgebildeten Sitzfläche einer Felge und mit einem Verstärkungsmaterial (10), das in dem Befestigungsbereich ausgebildet ist, wobei das Verstärkungsmaterial (10) über den Umfang des Fahrzeugreifens erstreckt ausgebildet ist und mit wenigstens einem spiralig von radial innen nach radial außen ausgebildeten, in Umfangsrichtung gewickelt angeordneten Festigkeitsträger ausgebildet ist,
**dadurch gekennzeichnet,**
**dass** in einem ersten radial inneren Erstreckungsbereich (12) des Verstärkungsmaterials (10) ein kontinuierlich und in Umfangsrichtung durchgehend ausgebildeter Festigkeitsträger (11) und in einem zweiten radial äußeren Erstreckungsbereich (13) des Verstärkungsmaterials (10) ein in Umfangsrichtung segmentiert ausgebildeter Festigkeitsträger (11') gewickelt ist.

2. Fahrzeugluftreifen gemäß den Merkmalen von Anspruch 1,
mit jeweils einem am radial inneren Ende einer Reifenseitenwand (5) ausgebildeten Reifenwulst, mit einer Karkasse (3), die sich auf beiden Seiten des Laufstreifens mit einem Hauptteil (3a) der Karkasse (3) vom Laufstreifen ausgehend durch die Reifenseitenwand (5) nach radial innen zum Reifenwulst erstreckt und die im Reifenwulst um einen zur Sicherung des Sitzes des Fahrzeugluftreifens auf einer korrespondierend ausgebildeten Felge über den Umfang des Fahrzeugluftreifens erstreckt ausgebildeten Wulstkern (6) umgeschlagen ist und sich mit dem Umschlag (3b) der Karkasse (3) nach radial außen erstreckt, wobei das Verstärkungsmaterial (10) ein Wulstverstärkungsmaterial ist.

3. Fahrzeugluftreifen gemäß den Merkmalen von Anspruch 1 oder 2,
wobei das Verstärkungsmaterial (10) axial neben insbesondere direkt auf - einer Karkassenlage angeordnet ist.

4. Fahrzeugluftreifen gemäß den Merkmalen von Anspruch 2 oder 3,
bei dem das Verstärkungsmaterial (10) auf der dem Hauptteil (3a) der Karkasse (3) axial zugewandten Seite des Wulstkerns (6) - insbesondere zwischen dem Hauptteil (3a) der Karkasse (3) und dem Wulstkern (6) - angeordnet ist.

5. Fahrzeugluftreifen gemäß den Merkmalen von Anspruch 3,
bei dem das Verstärkungsmaterial (10) auf der dem Umschlag (3b) der Karkasse (3) axial zugewandten Seite des Wulstkerns (6) - insbesondere zwischen dem Umschlag (3b) der Karkasse (3) und dem Wulstkern (6) - angeordnet ist.

6. Fahrzeugluftreifen gemäß den Merkmalen von Anspruch 3, 4 oder 5,
mit einem an der radialen Außenseite des Wulstkerns (6) angeordneten in Umfangsrichtung des Fahrzeugluftreifens über den gesamten Umfang (3b) des Fahrzeugluftreifens erstreckt ausgebildeten Kernreiter (7),

7. Fahrzeugluftreifen gemäß den Merkmalen von Anspruch 6,
wobei das Verstärkungsmaterial (10) axial zwischen Karkasse (3) und Kernreiter (7) vom Wulstkern (6) nach radial außen entlang der Oberfläche des Kernreiters (7) erstreckt ausgebildet ist.

8. Fahrzeugluftreifen gemäß den Merkmalen von Anspruch 6 oder 7,
wobei der Umschlag (3b) der Karkasse (3) in radialer Richtung nach außen im radialen Erstreckungsbereich des Kernreiters (7) endet.

9. Fahrzeugluftreifen gemäß den Merkmalen von einem oder mehreren der Ansprüche wobei die Festigkeitsträger (11,11') des Verstärkungsmaterials (10) direkt auf die Oberfläche des Wulstkerns (6) und/oder des Wulstkernreiters (7) gewickelte Festigkeitsträger (11,11') sind.

10. Fahrzeugluftreifen gemäß den Merkmalen von einem der vorangegangenen Ansprüche 2 bis 9,
mit einer Karkasse (3) radialer Bauart..

11. Fahrzeugluftreifen gemäß den Merkmalen von einem der vorangegangenen Ansprüche 2 bis 10,
wobei die Karkasse (3) Festigkeitsträger aus Stahl aufweist.

12. Fahrzeugluftreifen gemäß den Merkmalen von einem der vorangegangenen Ansprüche, wobei das Verstärkungsmaterial (10) Festigkeitsträger (11,11') aus Stahl aufweist.

13. Fahrzeugluftreifen gemäß den Merkmalen von einem oder mehreren der vorangegangenen Ansprüche,
wobei die Festigkeitsträger (11,11') des Verstärkungsmaterials im radial inneren Bereich (12) und im radial äußeren Bereich (13) der Verstärkungslage (10) mit gleichem konstruktivem Aufbau und mit gleichem Material ausgebildet sind.

14. Fahrzeugluftreifen gemäß den Merkmalen von einem der vorangegangenen Ansprüche 1 bis 12,
wobei die Festigkeitsträger (11,11') des Verstärkungsmaterials im radial inneren Bereich (12) und im radial äußeren Bereich (13) der Verstärkungslage (10) mit unterschiedlichem konstruktivem Aufbau ausgebildet sind.

15. Fahrzeugluftreifen gemäß den Merkmalen von einem der vorangegangenen Ansprüche 1 bis 12,
wobei die Festigkeitsträger (11,11') des Verstärkungsmaterials im radial inneren Bereich (12) und im radial äußeren Bereich (13) der Verstslrkungslage(10) mit unterschiedlichem Material ausgebildet sind.

16. Fahrzeugluftreifen gemäß den Merkmalen von einem der vorangegangenen Ansprüche; mit einem an der radialen Außenseite des Wulstkerns (6) angeordneten in Umfangsrichtung des Fahrzeugluftreifens über den gesamten Umfang des Fahrzeugluftreifens erstreckt ausgebildeten Kernreiter (7), der zwei- oder mehrteilig und insbesondere aus mindestens zwei Gununimischungen unterschiedlicher Elastizitätsmoduli ausgebildet ist.

## Claims

1. Vehicle tyre, in particular vehicle pneumatic tyre, with a tread, with an attachment region which is formed radially inside the tread and has the purpose of securing the vehicle tyre to a correspondingly formed seat surface of a rim and with a reinforcement material (10) which is formed in the attachment region, wherein the reinforcement material (10) is formed extending over the circumference of the vehicle tyre, and with at least one strength member which is formed in a helix from radially inward to radially outward and is arranged wound in the circumferential direction,
**characterized**
**in that** a strength member (11) which is formed continuously and uninterruptedly in the circumferential direction is wound in a first radially inner extent region (12) of the reinforcement material (10), and a strength member (11') which is formed in a segmented fashion in the circumferential direction is wound in a second radially outer extent region (13) of the reinforcement material (10).

2. Vehicle pneumatic tyre according to the features of Claim 1 with in each case a tyre bead which is formed at the radially inner end of a tyre side wall (5), with a carcass (3) which extends on both sides of the tread with a main part (3a) of the carcass (3) from the tread in a radially inward direction to the tyre bead through the tyre side wall (5), and which carcass (3) is folded over in the tyre bead about a bead core (6) which is formed, for the purpose of securing the seat of the vehicle pneumatic tyre, on a correspondingly formed rim in such a way that it extends over the circumference of the vehicle pneumatic tyre, and which carcass (3) extends radially outward with the folded-over portion (3b) of the carcass (3), wherein the reinforcement material (10) is a bead reinforcement material.

3. Vehicle pneumatic tyre according to the features of Claim 1 or 2, wherein the reinforcement material (10) is arranged axially next to, in particular directly on, a carcass layer.

4. Vehicle pneumatic tyre according to the features of Claim 2 or 3, in which the reinforcement material (10) is arranged on the side of the bead core (6) axially facing the main part (3a) of the carcass (3), in particular between the main part (3a) of the carcass (3) and the bead core (6).

5. Vehicle pneumatic tyre according to the features of Claim 3, in which the reinforcement material (10) is arranged on the side of the bead core (6) axially facing the folded-over portion (3b) of the carcass (3), in particular between the folded-over portion (3b) of the carcass (3) and the bead core (6).

6. Vehicle pneumatic tyre according to the features of Claim 3, 4 or 5, with a core rider (7) which is arranged on the radially outer side of the bead core (6) and is formed extending in the circumferential direction of the vehicle pneumatic tyre over the entire circumference (3b) of the vehicle pneumatic tyre.

7. Vehicle pneumatic tyre according to the features of Claim 6, wherein the reinforcement material (10) is formed axially between the carcass (3) and the core rider (7), extending radially outward along the surface of the core rider (7) from the bead core (6).

8. Vehicle pneumatic tyre according to the features of Claim 6 or 7, wherein the folded-over portion (3b) of the carcass (3) ends in the radial direction towards the outside in the radial extent region of the core rider (7).

9. Vehicle pneumatic tyre according to the features of one or more of the claims, wherein the strength members (11, 11') of the reinforcement material (10) are strength members (11, 11') which are wound directly onto the surface of the bead core (6) and/or of the bead core rider (7).

10. Vehicle pneumatic tyre according to the features of one of the preceding Claims 2 to 9, having a carcass (3) of radial design.

11. Vehicle pneumatic tyre according to the features of one of the preceding Claims 2 to 10, wherein the carcass (3) has strength members made of steel.

12. Vehicle pneumatic tyre according to the features of one of the preceding claims, wherein the reinforcement material (10) has strength members (11, 11') made of steel.

13. Vehicle pneumatic tyre according to the features of one or more of the preceding claims, wherein the strength members (11, 11') of the reinforcement material are formed in the radially inner region (12) and in the radially outer region (13) of the reinforcement layer (10), with an identical structural design and with the same material.

14. Vehicle pneumatic tyre according to the features of one of the preceding Claims 1 to 12, wherein the strength members (11, 11') of the reinforcement material are formed in the radially inner region (12) and in the radially outer region (13) of the reinforcement layer (10), with different structural designs.

15. Vehicle pneumatic tyre according to the features of one of the preceding Claims 1 to 12, wherein the strength members (11, 11') of the reinforcement material are formed in the radially inner region (12) and in the radially outer region (13) of the reinforcement layer (10), with different material.

16. Vehicle pneumatic tyre according to the features of one of the preceding claims, with a core rider (7) which is arranged on the radially outer side of the bead core (6), is formed extending in the circumferential direction of the vehicle pneumatic tyre over the entire circumference of the vehicle pneumatic tyre and is embodied in two or more parts, and in particular from at least two rubber mixtures with different moduli of elasticity.

**Revendications**

1. Bandage pour roue de véhicule, en particulier bandage pneumatique pour roue de véhicule, qui présente :

une bande de roulement,
une zone de fixation formée radialement à l'intérieur de la bande de roulement pour fixer le bandage de roue de véhicule sur une surface d'appui de configuration correspondante d'une jante, et
un matériau de renfort (10) formé dans la zone de fixation,
le matériau de renfort (10) s'étendant autour de la périphérie du bandage de roue de véhicule et étant configuré avec au moins un support de renforcement formé en spirale dans le côté radialement extérieur depuis le côté radialement intérieur et enroulé dans la direction de la périphérie,

**caractérisé en ce que**
un support de renforcement (11) continu dans le sens de la périphérie est enroulé en continu dans une première partie (12) du matériau de renfort (10) qui s'étend radialement vers l'intérieur et un support de renforcement (11') segmenté dans la direction périphérique est enroulé dans une deuxième partie (13) du matériau de renfort (10) qui s'étend radialement à l'extérieur.

2. Bandage pneumatique pour véhicule selon les caractéristiques de la revendication 1, qui présente un bourrelet de bandage formé à l'extrémité radialement intérieure de chaque paroi latérale (5) du bandage, avec une carcasse (3) qui s'étend sur les deux côtés de la bande de roulement avec une partie principale (3a) de la carcasse (3) en partant de la bande de roulement et sur la paroi latérale (5) du bandage, radialement à l'intérieur par rapport au bourrelet du bandage, qui est rabattu autour d'une âme de bourrelet (6) qui est configurée pour protéger l'assise du bandage pneumatique pour roue du véhicule sur une jante de configuration correspondante, qui est formée sur la périphérie du bandage pneumatique pour roue de véhicule et qui s'étend radialement vers l'extérieur avec le rabat (3b) de la carcasse (3), le matériau de renfort (10) étant un matériau de renfort de bourrelet.

3. Bandage pneumatique pour véhicule selon les caractéristiques de la revendication 1 ou 2, dans lequel le matériau de renfort (10) est disposé axialement à côté d'une couche de carcasse et en particulier directement sur celle-ci.

4. Bandage pneumatique pour véhicule selon les caractéristiques des revendications 2 ou 3, dans lequel le matériau de renfort (10) est disposé sur le côté de l'âme de bourrelet (6) tourné axialement vers la partie principale (3a) de la carcasse (3), en particulier entre la partie principale (3a) de la carcasse (3) et l'âme du bourrelet (6).

5. Bandage pneumatique pour véhicule selon les caractéristiques de la revendication 3, dans lequel le matériau de renfort (10) est disposé sur le côté de l'âme de bourrelet (6) tourné axialement vers le rabat (3b) de la carcasse (3), en particulier entre le rabat (3b) de la carcasse (3) et l'âme du bourrelet (6).

6. Bandage pneumatique pour véhicule selon les caractéristiques des revendications 3, 4 ou 5, doté un cavalier d'âme (7) disposé sur le côté radialement extérieur de l'âme de bourrelet (6) et qui s'étend dans la direction périphérique du bandage automatique de roue de véhicule sur toute la périphérie (3b) du bandage pneumatique de roue de véhicule.

7. Bandage pneumatique pour véhicule selon les caractéristiques de la revendication 6, dans lequel le matériau de renfort (10) s'étend axialement entre la carcasse (3) et le cavalier d'âme (7), partant de l'âme de bourrelet (6) et radialement vers l'extérieur le long de la surface du cavalier d'âme (7).

8. Bandage pneumatique pour véhicule selon les caractéristiques des revendications 6 ou 7, dans lequel le rabat (3b) de la carcasse (3) se termine dans la partie d'extension radiale du cavalier d'âme (7) dans la direction allant radialement vers l'extérieur.

9. Bandage pneumatique pour véhiculé selon les caractéristiques d'une ou plusieurs des revendications, dans lequel les supports de renforcement (11, 11') du matériau de renfort (10) sont des supports de renforcement (11, 11') enroulés directement sur la surface de l'âme de bourrelet (6) et/ou du cavalier (7) d'âme de bourrelet.

10. Bandage pneumatique pour véhicule selon les caractéristiques de l'une des revendications 2 à 9 qui précèdent, qui présente une carcasse (3) de structure radiale.

11. Bandage pneumatique pour véhicule selon les caractéristiques d'une des revendications 2 à 10 qui précèdent, dans lequel la carcasse (3) présente des supports de renforcement en acier.

12. Bandage pneumatique pour véhicule selon les caractéristiques d'une des revendications précédentes, dans lequel le matériau de renfort (10) présente des supports de renforcement (11, 11') en acier.

13. Bandage pneumatique pour véhicule selon les caractéristiques d'une ou plusieurs des revendications précédentes, dans lequel les supports de renforcement (11, 11') du matériau de renfort sont formés dans la partie radialement intérieure (12) et dans la partie radialement extérieure (13) de la couche de renfort (10) avec la même disposition structurelle et en le même matériau.

14. Bandage pneumatique pour véhicule selon les caractéristiques des revendications 1 à 12 qui précèdent, dans lequel les supports de renforcement (11, 11') du matériau de renfort sont formés selon une structure différente dans la partie radialement intérieure (12) et la partie radialement extérieure (13) de la couche de renfort (10).

15. Bandage pneumatique pour véhicule selon les caractéristiques d'une des revendications 1 à 12 qui précèdent, dans lequel les supports de renforcement (11, 11') du matériau de renfort sont réalisés en le même matériau dans la partie radialement intérieure (12) et dans la partie radialement extérieure (13) de la couche de renfort (10).

**16.** Bandage pneumatique pour véhicule selon les caractéristiques d'une des revendications précédentes, qui présente un cavalier d'âme (7) disposé sur le côté radialement extérieur de l'âme de bourrelet (6), s'étendant dans la direction de la périphérie du bandage automatique de roue de véhicule sur toute la périphérie du bandage pneumatique de roue de véhicule et formé en deux ou plusieurs parties et en particulier en au moins deux mélanges de caoutchouc qui présentent des modules d'élasticité différents.

**FIG. 1**

# FIG. 2a

$$\Delta H = H_A - H_{LF}$$

# FIG. 2b

EP 1 979 175 B1

13

FIG. 2c

$\Delta H = H_A - H_{LF}$

$H_{LF}$

$H_U$

$H_{KR}$

$H_{KB}$

$H_I$

$H_W$

$H_A$

$B_{Kmax}$

3

5

15

4

13

7

3b

11'

10

3a

12

11

V

L

$S_3$

X

6

9

V

14

**FIG. 3a**

## FIG. 3b

FIG. 3c

FIG. 4

**FIG. 5**

# FIG. 6a

$\Delta H = H_A - H_{LF}$

EP 1 979 175 B1

# FIG. 6b

$\Delta H = H_A - H_{LF}$

EP 1 979 175 B1

**FIG. 6c**

# FIG. 7a

$\Delta H = H_A - H_{LF}$

EP 1 979 175 B1

FIG. 7b

3
5
15
7
V
$S_2$
L
13
10
11'
3a
12
11
V
9
6
3b
X
$B_{Kmax}$
$H_I$
$H_W$
$H_A$
$H_{KB}$
$H_{KR}$
$H_U$
$H_{LF}$
$\Delta H = H_A - H_{LF}$

FIG. 7c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004008308 A1

- WO 03103990 A1